# EUROPEAN PATENT APPLICATION

(11) **EP 2 335 512 A1**
(43) Date of publication of application: **22.06.2011**
(21) Application number: 11156301.1
(22) Date of filing: 27.01.2009
(51) Int. Cl.: A45C 3/04, B65D 33/00, G09F 3/10, B65D 33/06, B65D 33/02, A45C 3/00, A45C 13/08, A45C 13/26

(54) **Shopping bag made of nonwoven fabric**

(30) Priority: 28.01.2008 JP 2008016260; 28.01.2008 JP 2008016261; 14.03.2008 JP 2008065893; 20.05.2008 JP 2008131849
(62) Divisional of application: 09250203.8
(71) Applicant: Axis Co., Ltd., Tokyo (JP)
(72) Inventor: Miwa, Fukuichi, Chiyoda-ku Tokyo (JP)
(74) Representative: Scott, Susan Margaret

(57) **Abstract**

A shopping bag made of nonwoven fabric comprising:
a lower part (8) which has a bottom (7) that is capable of closing and stretching linearly;
right and left sides (10) that are folded inward with a gusset (9); and
an upper part (11) forming a pair of folded broad handles (4); wherein
at least a surface of the shopping bag is made of polyolefin nonwoven fabric, and
at each of the right and left sides of the bag, two corners are heat-sealed at a tie together point extending in a longitudinal direction, and at the top of the each heat-sealed part, an ear part (3) extending upward from the upper edge of the sides of the bag is formed and the upper edge of the ear part is shaped like a bent convex curve, and a part from the side edge of the ear part to the upper edge of each side of the bag is shaped like a bent concave curve.

## Description

### INCORPORATION BY REFERENCE

The disclosure of the following Japanese Patent Applications: No. 2008-16260 filed on January 28, 2008, No. 2008-16261 filed on January 28, 2008, No. 2008-65893 filed on March 14, 2008 and No. 2008-131849 filed on May 20, 2008 including the specification, drawings and abstract is incorporated herein by reference in its entirety.

### BACKGROUND OF THE INVENTION

### 1. Field of the Invention

The present invention relates to a shopping bag made of nonwoven fabric. More particularly, the present invention relates to a shopping bag made of nonwoven fabric which is easy to recycle, hard to damage even while holding heavy loads, and suitable for carrying around thanks to its light weight and compactness.

### 2. Description of the Related Art

Recycled paper has long been used from the perspective of utilizing resources effectively. In general, deinked pulp is first manufactured by drinking printed waste paper such as newspapers and magazines. Then, the deinked paper alone or mixture of it and other pulp is processed as raw material to manufacture recycled paper. The deinking process is essential for manufacturing recycled paper, making it more expensive than the paper made only from virgin pulp. Nevertheless, the establishment of the deinking technology realized the recycling of paper, and thus resulted in the promotion of efficient use of resources through the application of such paper. However, when it comes to products with printed surfaces made of synthetic resin sheets, films, etc., the technology for removing their print ink has not necessarily established sufficiently yet.

Meanwhile, nowadays customers at retail stores such as supermarkets are mainly using shopping bags made of resin films distributed free of charge as a means of carring merchandise they purchased home. Above all, the most widely used are the ones manufactured by welding thin films made from low-density polyethylene to shape a form of a bag. However, since these kinds of shopping bags are vulnerable to elongation, carrying them while packed with heavy merchandise will easily stretch the resin films, leading to tearing or deformation of the bags. For this reason, most of the shopping bags made of resin films are used in a disposable manner.
As the shopping bags made of resin films are manufactured using petroleum oil as raw material, throwing them away after a single use leads to a waste of precious oil resourses. Furthermore, owing to various additives usually applied to the bags, disposing of them through incineration may generate harmful gases such as CO₂. Carbon dioxide, also called a greenhouse gas, is known to cause global wanning. The disposable manner of using the shopping bags made of resin films, therefore, is pretty unfavorable in terms of environmental preservation and resource saving.
Upon considering the problems, the present inventor proposed a retrievable and reproducible (recyclable) shopping bag prior to the filing of this application, which is manufactured by sewing nonwoven fabric mainly made of polyester resin with the same polyester resin thread to shape a form of a bag (disclosed in Japanese Patent Nos. JP-A-3876409 and JP-A-3959674).

Shopping bags distributed at retail stores are generally printed with logos unique to the individual stores. Since these logos play the role of identifying and advertising each retail store, the stores are hoping to have logos printed on the shopping bags made of nonwoven fabric, which are designed for reuse.
However, although printing logos on the related-art shopping bags made of nonwoven fabric necessitate removing of print ink in order for the nonwoven fabric, a base material of shopping bags, to be reproduced, the technology for that process is yet to be developed and proposed. Accordingly, it has been needed to provide new kinds of shopping bags which are easily reproduced from retrieved old ones to new ones even with logos printed, thus leading to the promotion of recycling.
The shopping bag made of resin disclosed in Japanese Patent No. JP-A-3876409 was designed for repetitive use of about 5 times instead of single disposable use under normal conditions. Should the bag be damaged while in use as a shopping bag, consumers are asked to return it to the retailer where they did the shopping. Then the retailer returns it to the manufacturer, where a new bag is reproduced from the retrieved material; recycling is done by reusing this new bag. The shopping bag made of resin disclosed in Japan ese Patent No. JP-A-3876409, therefore, is easy to recycle, resource saving, and also preferable in terms of environmental preservation.
Since it is desirable for shopping bags for repetitive use to have strength to withstand damage even if heavy or bulky merchandise is stored, the shopping bag made of resin disclosed in Japanese Patent No. JP-A-3876409 had more room for improvement from the viewpoint of strength.
That is to say, it has been a challenge to provide a shopping bag made of nonwoven fabric with further strength and a method for recycling the same to facilitate the reproduction of new unprinted shopping bags made of nonwoven fabric from printed ones.

### SUMMARY OF THE INVENTION

After several keen examinations aimed at achieving the above-mentioned goals, the present inventor has found that, with regard to a shopping bag at least whose surface is made of nonwoven fabric, as a result of setting up a print ink layer on the surface of the nonwoven fabric, and interposing a polymer region with high solubility to hot water between the print ink layer and the nonwoven fabric, just retting the shopping bag made of nonwoven fabric in warm water facilitates the separation of the print ink layer from the nonwoven fabric, hence potentially promoting the recycling of printed shopping bags made of nonwoven fabric. This is how the present invention has come to be completed.

The present invention relates to a shopping bags made of nonwoven fabric and a method for recycling the same according to first to nineteenth aspects of the present invention as described below.
(1) A shopping bag made of nonwoven fabric according to a first of the present invention includes: a lower part which has a bottom that is capable of closing and stretching linearly, right and left sides that are folded inward with a gusset, and an upper part forming a pair of folded broad handles. At least a surface of the shopping bag is made of polyolefin nonwoven fabric. A surface of the nonwoven fabric has a print ink layer. A polymer region with high solubility to hot water is interposed between the print ink layer and the nonwoven fabric.
(2) According to a second aspect of the present invention, in the shopping bag made of nonwoven fabric according to the first aspect, the polymer region is composed of polymers whose solubility is less than 20 g per 100-g water at 20°C and 60 g or more per 100-g water at 60°C.
(3) According to a third aspect of the present invention, in the shopping bag made of nonwoven fabric according to the first or second aspect, the polymer region contains modified polyvinyl alcohol with a cross-linked structure.
(4) According to a fourth aspect of the present invention, in the shopping bag made of nonwoven fabric according to the third aspect, the modified polyvinyl alcohol is composed of polymers whose solubility is less than 20 g per 100-g water at 20 °C and 60g or more per 100-g water at 60 °C.
(5) According to a fifth aspect of the present invention, in the shopping bag made of nonwoven fabric according to any one of the first to fourth aspects, the polymer region is formed by a layer of the polymers formed on the surface of the polyolefin nonwoven fabric.
(6) According to a sixth aspect of the present invention, in the shopping bag made of nonwoven fabric according to any one of the first to fourth aspects, the polymer region is formed by the polymers being impregnated into the polyolefin nonwoven fabric.
(7) A recycle method of a shopping bag made of nonwoven fabric according to a seventh aspect of the present invention includes: retrieving the shopping bag made of nonwoven fabric according to any one of the first to sixth aspects, the shopping bag having been used; removing the print ink layer from the surface made of nonwoven fabric of the shopping bag made of nonwoven fabric by retting the retrieved shopping bag made of nonwoven fabric in warm water or alkali water to dissolve the polymer region into the warm water or alkali water, and reproducing a shopping bag made of nonwoven fabric by using the used shopping bag made of nonwoven fabric from which the print ink layer has been removed as raw material.
(8) According to an eighth aspect of the present invention, in the recycle method of a shopping bag made of nonwoven fabric according to the seventh aspect, the shopping bag made of nonwoven fabric is vibrated while being retted in warm water or alkali water.
(9) A shopping bag made of nonwoven fabric according to a ninth aspect of the present invention includes: a lower part which has a bottom that are capable of closing and stretching linearly, right and left sides that are folded inward with a gusset, and an upper part forming a pair of folded broad handles. At least a surface of the shopping bag is made of polyolefin nonwoven fabric. The whole or at least some part including the handles of the upper part is made of single-layer thick nonwoven fabric with 1.1 times or more thickness compared with the other parts of the shopping bag.
(10) According to a tenth aspect of the present invention, in the shopping bag made of nonwoven fabric according to the ninth aspect, the whole or at least some part including the handles of the upper part has 1.8 to 3.0 times thickness compared with the other parts of the shopping bag.
(11) According to an eleventh aspect of the present invention, in the shopping bag made of nonwoven fabric according to the ninth or tenth aspect, the length of a part made of the thick nonwoven fabric along the longitudinal direction of the shopping bag made of nonwoven fabric is one-fifth to one-third of the whole length of the shopping bag.
(12) A shopping bag made of nonwoven fabric according to a twelfth aspect of the present invention includes: a lower part which has a bottom that is capable of closing and stretching linearly, right and left sides that are folded inward with a gusset, and an upper part forming a pair of folded broad handles. At least a surface of the shopping bag is made of polyolefin nonwoven fabric. At each of the right and left sides of the bag, two corners are heat-sealed at a tie together point extending in a longitudinal direction, and at the top of the each heat-scaled part, an ear part extending upward from the upper edge of the sides of the bag is formed.
(13) According to a thirteenth aspect of the present invention, in the shopping bag made of nonwoven fabric according to the twelfth aspect, the upper edge of the ear part is shaped like a bent convex curve, and a part from the side edge of the ear part to the upper edge of each side of the bag is shaped like a bent concave curve.
(14) According to a fourteenth aspect of the present invention, in the shopping bag made of nonwoven fabric according to the first aspect, the shopping bag is made of polypropylene nonwoven fabric.
(15) According to a fifteenth aspect of the present invention, in the shopping bag made of onwoven fabric according to the ninth aspect, the shopping bag is made of polypropylene nonwoven fabric.
(16) According to a sixteenth aspect of the present invention, in the shopping bag made of nonwoven fabric according to the twelfth aspect, the shopping bag is made of polypropylene nonwoven fabric.
(17) According to a seventeenth aspect of the present invention, the shopping bag made of nonwoven fabric according to the fourteenth aspect is sewn with polypropylene continuous filament.
(18) According to an eighteenth aspect of the present invention, the shopping bag made of nonwoven fabric according to the fifteenth aspect is sewn with polypropylene continuous filament.
(19) According to a nineteenth aspect of the present invention, the shopping bag made of nonwoven fabric according to the sixteenth aspect is sewn with polypropylene continuous filament.

The present invention provides a shopping bag made of nonwoven fabric whose print ink layer can easily be separated from the nonwoven fabric, by interposing a polymer region with high solubility to hot water between the print ink layer and the nonwoven fabric, as a result of the dissolution of the polymer region into warm water.
Since the shopping bag made of nonwoven fabric of the present invention is made of easy-to-recycle nonwoven fabric, retrieving the used bag and separating the print ink layer from the nonwoven fabric enables the reproduction of a new shopping bag made of nonwoven fabric using the used bag from which the print ink layer has been separated. Consequently, the present invention provides a recycling method in which the printed shopping bag made of nonwoven fabric repeats a cycle of retrieval, reproduction, and then reuse.
As a result of manufacturing the upper part of the bag including a handle with single-layer thick nonwoven fabric, the present invention also provides a shopping bag made of nonwoven fabric which has high enough strength compared with related-art shopping bags made of nonwoven fabric without thick parts to be able to adequately withstand repetitive use.
Besides, at each of the right and left side of the shopping bag made of nonwoven fabric of the present invention, two corners are heat-sealed at a tie together point extending in a longitudinal direction, and the top of the each heat-sealed part is equipped with an ear part extending upward from the upper edge of the side of the bag. This prevents concentration of load stress on the upper part of the heat-sealed part, thus providing a shopping bag made of nonwoven fabric whose load limits as well as permissible volume of contents stuffed inside can significantly be increased compared with related-art shopping bags made of nonwoven fabric without such car parts.
Furthermore, the ability to be folded compactly as well as the lightness of the shopping bag made of nonwoven fabric of the present invention makes it quite suitable to carry it around.

### BRIEF DESCRIPTION OF THE DRAWINGS

FIG. 1 is a perspective view illustrating a shopping bag according to Example 1 of the present invention;
FIG 2 is an enlarged sectional view along the line A-A' in FIG 1 showing a print ink layer included in the shopping bag;
FIGS. 3 (a) to (f) are schematic diagrams illustrating the manufacturing process of` the shopping bag of Example 1;
FIG. 4 is a diagram showing a recycling method of the shopping bag of the present invention;
FIG. 5 is a perspective view illustrating a shopping bag of Example 2 of the present invention;
FIG. 6 is a perspective view illustrating a shopping bag of Example 3 of the present invention;
FIGS. 7 (g) to (1) are schematic diagrams illustrating the manufacturing process of the shopping bag of Example 3;
FIG. 8 is a sectional view of part A in FIG. 6;
FIG. 9 is a sectional view of part B in FIG. 6;
FIG. 10 is a schematic diagram illustrating the manufacturing process of a shopping bag of Example 4 of the present invention; and
FIG. 11 is a schematic diagram illustrating the manufacturing process of a shopping bag of Example 5 the present invention.

### DETAILED DESCRIPTION OF THE PREFERRED EMBODIMENT

According to some embodiments, a shopping bag made of non woven fabric of the present invention is made of polyolefin nonwoven fabric such as polyethylene nonwoven fabric or polypropylene nonwoven fabric for its ease of recycling, strength, and formability. Of all others, polypropylene nonwoven fabric is especially preferable because of its ease of reproduction.

Since the nonwoven fabric used for the shopping bag made of nonwoven fabric of the present invention is not only lightweight but also able to be folded to a compact form and then unfolded to the original form with ease, this shopping bag is fairly suitable for carrying around. In addition, the fact that the whole bag is optimally made of uniform nonwoven fabric means that no separation is required to send this shopping bag to the reproduction process, thus making the recycling quite easy.

At least the surface of the shopping bag made of nonwoven fabric of the present invention is made of nonwoven fabric, on which a print ink layer is set up, and between the print ink layer and the nonwoven fabric a polymer region with high solubility to hot water is interposed.
If at least the surface of the shopping bag made of nonwoven fabric of the present invention is made of a laminated body of nonwoven fabric, there are no particular restrictions on the base material for the laminated body as long as it renders enough strength to the shopping bag. The following can be used for the base material, for example: plastic films made from polyester, polyamide, polyvinyl alcohol, polycarbonate, polyethylene, or polypropylene; paper materials such as kraft paper, quality paper, glassine paper, or cellophane; sheets made from starch or cellulose; fabric cloths made from cotton, hemp, polyamide, or polyester. There are no particular restrictions on the lamination method for the laminated body; any known methods can be deployed.

The nonwoven fabric used in the present invention can be either undyed or dyed using common dying methods such as beam dyeing, jet dyeing, and dipping. In the case of recycling the shopping bag of the present invention made of dyed nonwoven fabric, retrieving shopping bags according to their color and reusing each make it possible to reproduce new shopping bags without decoloring the retrieved bag materials.

The fact that the polymer region is required not to be changed through dissolution and separation of the print ink layer even when the shopping bag of the present invention gets wet with rain necessitates the region to resist dissolving in cold water. Furthermore, in order for the polymer region to be separated from the surface of the nonwoven fabric with ease, the region should have the property of being dissolved easily at the contact (retting) with hot water of 60 °C or above. It is favorable, hence, for the solubility of the polymers to be less than 20 g per 100-g water at 20 °C and 60 g or more per 100-g water at 60 °C to satisfy these requirements.

For the use in the present invention, polyvinyl alcohol is the polymer of choice for having the unique water resistance as mentioned above, i.e., dissolving easily in hot water of 60 °C or above but hardly dissolving in cold water such as room-temperature water.
There are no particular restrictions on what type of polyvinyl alcohol to be used in the present invention as long as it has the water resistance as mentioned above. Examples may include modified polyvinyl alcohol which has various modification groups such as alkoxy groups, ester groups, and alkylene ether groups. It is desirable for the saponification rate to be 97.5 mol% or more. Especially, modified polyvinyl alcohol with cross-linked structures synthesized by polymerizing crosslinker to polyvinyl alcohol is used preferably. Above all, it is preferable a modified polyvinyl alcohol obtained by polymerizing an acetoacetylated polyvinyl alcohol containing the structure shown in the following chemical formula 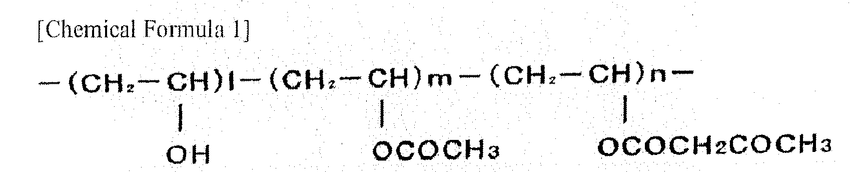 (wherein 0 ≤ 1 ≤ 1, 0 ≤ m ≤ 1, 0 ≤ n ≤ 1, and 0.8 ≤ I + m + n ≤ 1, and 1, m and n is a molar ratio of each component) with a crosslinker. The acetoacetylated polyvinyl alcohol may be a random polymer or a polymer having a block polymer moiety. Among the commercial products, Gohsefimer Z-200 and Z-410 (made by Nippon Synthetic Chemical Industry Co. Ltd.) is most suitable.

There are no particular restrictions on what type of crosslinker compound to be used in the present invention as long as it can render the water resistance as mentioned above by cross-linking polyvinyl alcohol. Examples may include polyvalent metal compounds, boron compounds, amino compounds, hydrazine compounds, silane compounds, compounds containing methylol groups, compounds containing aldehyde groups, epoxy compounds, thiol compounds, and isocyanate compounds. These are all applicable either singly or in combination of two or more compounds. Among the commercial products, Glyoxal GX (made by Nippon Synthetic Chemical Industry Co., Ltd.), Smimal M-30W (made by Sumitomo Chemical Co., Ltd.), and Highlink DM (made by Clariant), for example, are preferable. The ratio of crosslinker to be added to polyvinyl alcohol is 0.1 to 2.0 percent by mass, preferably 1.0 to 1.5 percent by mass, or optimally 0.5 to 1.0 percent by mass. If the amount of crosslinker added is less than the aforementioned minimum, the degree of crosslinkage gets insufficiently low; thus the expected water resistance to room-temperature water and hot water can not be attained. In contrast, if the amount added is more than the aforementioned maximum, especially more than 2.0 percent by mass, the degree of crosslinkage gets so high that, as the water resistance to room-temperature water gets high, the water resistance to hot water gets too high as well. As a result, it becomes impossible to attain the water resistance peculiar to the polymer region of the present invention, that is to say, dissolving easily in hot water of 60 °C or above but hardly dissolving in cold water such as room-temperature water.

The desirable acetoacetylated polyvinyl alcohol to be used in the present invention is a compound obtained by acetoacetylating a polyvinyl alcohol. There are several suitable methods used for acetoacetylation, for example: adding diketene to polyvinyl alcohol dispersed in acetic acid solvent, adding diketene to polyvinyl alcohol dissolved in solvent such as dimethyl formaldehyde or dioxane in advance, or contacting diketene gas or liquid diketene directly to polyvinyl alcohol.

In the present invention, the polyvinyl alcohol with acetoacetyl groups introduced to the side chains, upon reacting with amine compounds as crosslinkers, forms the cross-linked structures as shown below. 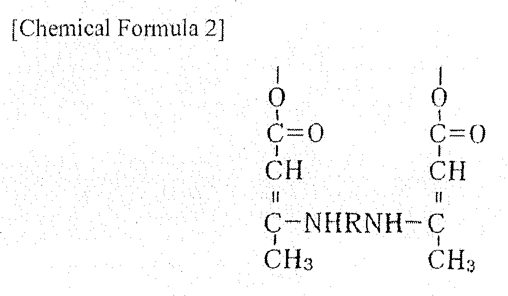 The polyvinyl alcohol with intramolecular acetoacetyl groups, upon reacting with compounds containing aldehyde groups as crosslinkers, forms the cross-linked structures as shown below. 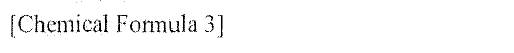 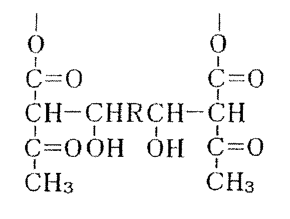 The polyvinyl alcohol with intramolecular acetoacetyl groups, upon reacting with compounds containing methylol groups as crosslinkers, forms the cross-linked structures as shown below. 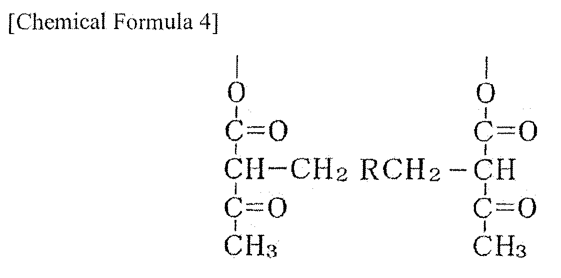 The polyvinyl alcohol with intramolecular acetoacetyl groups, upon reacting with polyvalent metal compounds as crosslinkers, forms the cross-linked structures as shown below.

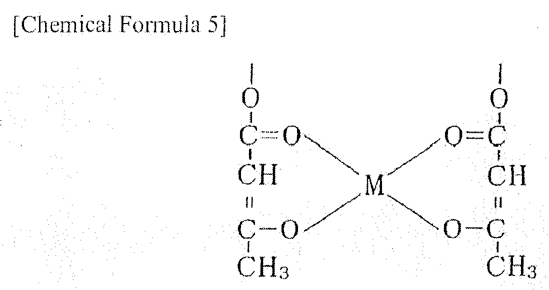

Since the acetoacetylated polyvinyl alcohol with the above-mentioned cross-linked structures of the present invention has the property of hardly dissolving in acids yet easily dissolving in strong alkalis, apart from hot water of 60 °C or above, alkali water such as sodium hydroxide can be used to dissolve it without any difficulty.

In the polymer region, for example, the polymer layer can be formed on the surface of the nonwoven fabric by thermal-bonding film-shaped polymers with high solubility to hot water to the surface of the nonwoven fabric with an iron. Alternatively, in the polymer region, for example, the layer can be formed by coating or spraying the aqueous solution of the polymers on the surface of the nonwoven fabric; then drying to let the polymers be impregnated into the nonwoven fabric. Laminating the surface of the nonwoven fabric with polymers creates sufficiently thick polymer region between the nonwoven fabric and the print ink layer, rendering it easy to separate the print ink layer from the nonwoven fabric when necessary. Meanwhile, impregnating the nonwoven fabric with the polymers makes the finish look beautiful due to the high adhesiveness of the polymers to the nonwoven fabric.

The shopping bag made of nonwoven fabric of the present invention will be printed with, for example, a logo unique to each retailer on the surface of the nonwoven fabric in accordance with each intended purpose. Logos serving as identifiers and promoters of each retailer are printed on the surface of the nonwoven fabric with the polymer region interposed therebetween formed by the aforementioned method. There are no particular restrictions on a printing method as long as it is accepted as related-art method for printing on the nonwoven fabric, for example: letterpress, photogravure, offset, serigraphy, and transferring printing arc all applicable. Of all others, serigraphy is preferable because it can be used to print on any surface regardless of its thickness, size, and shape (e.g., whether it is flat, curved or not). In the case of printing on the shopping bag, the following is all applicable, for example: bonding a preprinted film to the surface of the shopping bag with an iron, printing on the film after it is bonded to the surface of the nonwoven fabric, or printing on the surface of the nonwoven fabric impregnated with polymer solution.

With regard to the shopping bag made of nonwoven fabric of the present invention, interposing a polymer region with high solubility to hot water between the nonwoven fabric and the print ink layer enables the print ink layer to separate from the surface of the nonwoven fabric with ease after retting the shopping bag made of nonwoven fabric in warm water that is above a certain temperature owing to the dissolution of the polymer region in the warm water. Adding vibration, especially ultrasonic vibration, to the shopping bag made of nonwoven fabric retted in the warm water at this point further enhances the ease with which the print ink layer is separated from the nonwoven fabric. Besides, the print ink constituting the separated print ink layer is generally insoluble in water and does not dissolve even in warm water; hence the print ink layer alone can be removed from the warm water without any difficulty. Moreover, since separating the print ink layer from the product made of nonwoven fabric of the present invention only uses water instead of organic solvent, or the like, no impact is made on the health of workers as well as on the environment such as soil pollution.

According to another embodiment, a recycling method of a shopping bag made of nonwoven fabric of the present invention includes retrieving of the shopping bag made of nonwoven fabric, retting of the nonwoven fabric to remove the print ink layer from the nonwoven fabric, reproducing of a new shopping bag made of nonwoven fabric. In the retrieving process, the shopping bag made of nonwoven fabric of the present invention is retrieved as a used bag after being used for several times. In the retting process, the print ink layer is removed from the nonwoven fabric by the aforementioned method. In the reproducing process, a new shopping bag made of nonwoven fabric is reproduced using the used shopping bag made of nonwoven fabric whose print ink layer is removed as raw material.

The whole or some part at least including the handles of the upper part of the shopping bag of made of nonwoven fabric the present invention has 1.1 times or more thickness compared with the other parts of the shopping bag, granting sufficient tensile as well as tear strength to withstand the weight of a load. To further strengthen the shopping bag, it is preferable for the whole or some part at least including the handles of the upper part of the shopping bag to have 1.8 to 3.0 times thickness compared with the other parts of the shopping bag. Beside, the thick part of the shopping bag made of nonwoven fabric of the present invention is provided not by increasing the layers of the nonwoven fabric, such as making the fabric double layered, but by a single layer, improving the strength considerably compared with a double-layered structure. Moreover, it is preferable for the length of the thick part along the longitudinal direction of the shopping bag to be one-fifth to one-third of the whole length of the shopping bag.

The shopping bag made of nonwoven fabric of the present invention includes the right and left side each having two corners which are heat-scaled at a tie together point extending in a longitudinal direction, and at the top of the each heat-sealed part, an ear part extending upward from the upper edge of the side of the bag. In the case of related-art shopping bags, putting big and bulky merchandises or numerous merchandises inside it bulges the shopping bag, resulting in the addition of strength in the width direction of the shopping bag. This strength concentrates on the upper side of the tie together point at the each side of the shopping bag. As the sides of the shopping bag are sewn together with thread, upon being subjected to stretching strength in the width direction, the bag tears apart at the tie together points of the side of the bag, the seams, where the strength is concentrated, generating such problems. As opposed to this, the shopping bag made of nonwoven fabric of the present invention includes the right and left side each having two corners which are heat-sealed at a tie together point extending in a longitudinal direction, and at the top of the each heat-sealed part, an ear part extending upward from the upper edge of the side of the bag. This feature helps prevent the stress of the stretching strength in the width direction from concentrating on the upper side of the tie together point at the each side of the bag, dispersing the stress across the wide area of the upper edge of the side of the bag. The ear part is formed by cutting off a part of the nonwoven fabric, that is to say, it is arranged along with the shopping bag. In addition, the upper edge of the ear part is shaped like a bent convex curve, and the part from the side edge of the ear part to the upper edge of the side of the bag is shaped like a bent concave curve, alleviating the stress put on the side of the bag by dispersing it across the wide area of its upper edge.

The shopping bag made of nonwoven fabric of the present invention is formed by the following method, yet there are other methods to form it.
According to a forming method of the shopping bag made of nonwoven fabric of the present invention, after preparing a rectangular nonwoven fabric sheet, the nonwoven fabric sheet is folded so that the one short side of the sheet laps over the other; then a part of the fold is cut off to form the handle and the seal fragment. Next, sides of the bag are formed by machine-sewing with the thread made of the same material as the bag itself or heat-sealing the lapped right and left long sides together. Subsequently, sewn or heat-sealed right and left sides of the bag are folded inward to make enough space for attaching a gusset to the bag body; then the lower edge of the inward-folded part and the lapped bottom are machine-sewed with the thread or heat-scaled together to form the right and left sides and the lower part of the bag body. Finally, the obtained bag body is turned inside out to complete the shopping bag made of nonwoven fabric of the present invention.

According to the second aspect of the forming methods of the shopping bag made of nonwoven fabric of the present invention, although the handle is formed by cutting off a part of the nonwoven fabric sheet as in the aforementioned aspect, the second aspect differs from it in respect of forming the handle not at the folds but at the sewn or heat-sealed short sides. In other words, after preparing a rectangular nonwoven fabric sheet, the nonwoven fabric sheet is folded so that the one short side of the sheet laps over the other short side. The lapped edges of the short sides are machine-sewed with the thread made of the same material as the bag itself or heat-sealed; then a part of the sewn or heat-sealed short sides is cut off to form the handle and the seal fragment. Next, sides of the bag are formed by machine-sewing with the thread made of the same material as the bag itself or heat-sealing the lapped right and left long sides together. Subsequently, sewn or heat-sealed right and left sides of the bag are folded inward to make enough space for attaching a gusset to the bag body; then the lower edge of the inward-folded part and the lapped bottom are machine-sewed with the thread or heat-sealed together to form the right and left sides and the lower part of the bag body. Finally, the obtained bag body is turned inside out to complete the shopping bag made of nonwoven fabric of the present invention.

When the shopping bag made of nonwoven fabric of the present invention includes the whole or some part at least including the handles of the upper pail is made of single-layered thick nonwoven fabric which is 1.1 times or more thickness compared with the other part of the shopping bag made of nonwoven fabric, first a nonwoven fabric sheet is prepared whose center in the long side direction is 1.1 times or more thicker than both ends, or a nonwoven fabric sheet whose both ends in the long side direction is 1.1 times or more thicker than the center. Then the aforementioned forming method of the shopping bag made of nonwoven fabric is followed so that the thick part of the nonwoven fabric sheet forms the handle.

When the shopping bag made of nonwoven fabric of the present invention includes ear parts, a part of the nonwoven fabric sheet is cut off as described in the aforementioned forming method of the shopping bag made of nonwoven fabric to form the ear parts along with the handle and the sealing fragment.

The shopping bag made of nonwoven fabric of the present invention can also take an aspect in which, at the fringe of the apertural area and the fringe of the handle, a nonwoven fabric tape made of the same material as the bag itself is stitched with thread made of the same material as the bag itself. After cutting off the handle and the seal fragment from the nonwoven fabric sheet, the cut-off end edge is covered with a nonwoven fabric tape made of the same material as the bag itself, and then they are sewn together with the thread made of the same material. In this case, although the nonwoven fabric can of course cover the end edge as it is for reinforcement, folding the end edge inward more than once before covering it, and further thickening the end edge, resulting in increased reinforcement. The nonwoven fabric tape may be stitched across the whole circumference of the end edge from the viewpoint of reinforcement, and the nonwoven fabric tape only has to have enough width and thickness to be able to reinforce the end edge.
The handle of this reinforced shopping bag made of nonwoven fabric of the present invention is resistant to elongation in a longitudinal direction even when carrying heavy or bulky merchandises, making it more suitable for repetitive use.
Moreover, the fact that the resin shopping bag of the present invention is all made of the same material including the bag body, the thread, and the nonwoven fabric tape allows workers to omit the cumbersome task of sorting them during recycle.

### Examples

### Example I

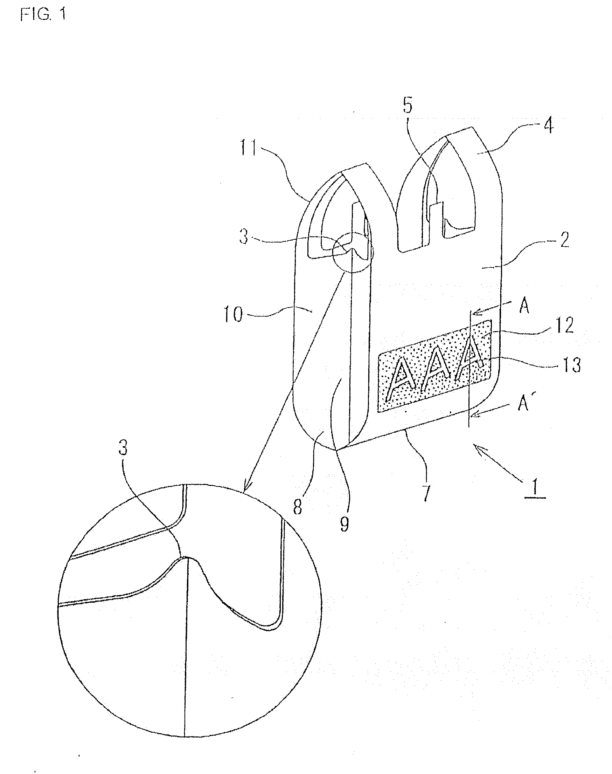

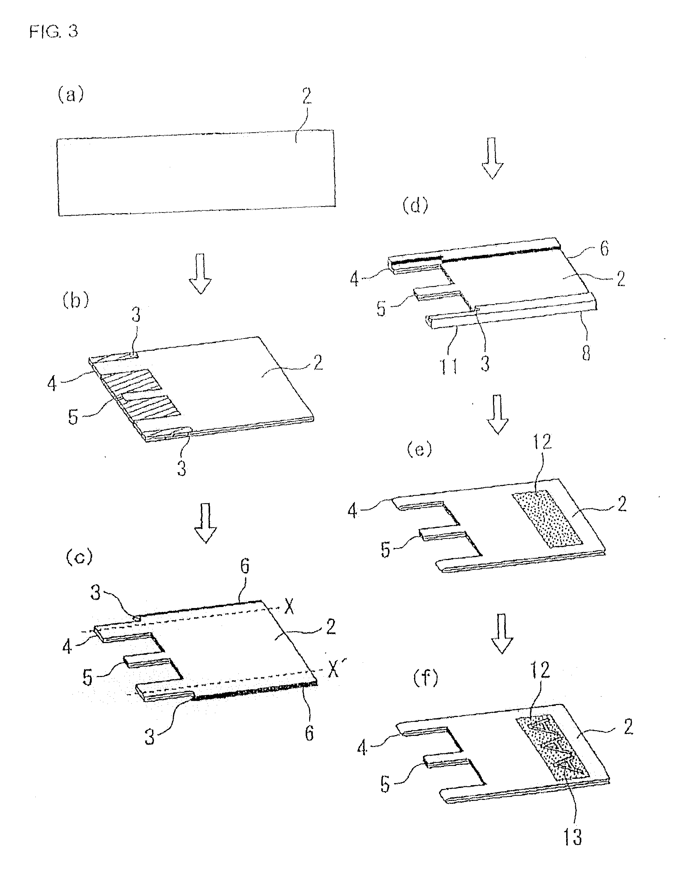

The following is the more detailed explanations of the present invention with reference to the accompanying drawings. FIG. 1 is a perspective view illustrating a shopping bag made of nonwoven fabric according to Example 1 of the present invention. FIGS. 3 (a) to (f) are schematic diagrams illustrating one example of the forming process of the shopping bag depicted in FIG. 1.

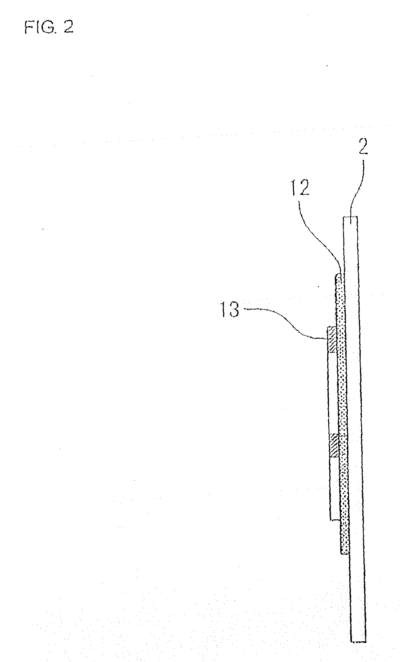

For this shopping bag 1 is this example, a polypropylene nonwoven fabric sheet 2 was heat-sealed to shape a bag form. The shopping bag 1 was manufactured, for instance, as depicted in FIGS. 3 (a) to (f). In the method depicted in FIGS. 3 (a) to (f), a slender and rectangular polypropylene nonwoven fabric sheet 2 had been prepared; then the nonwoven fabric sheet was folded so that the one short side was lapped over the other (see FIG. 3(b)). Then, a part of the nonwoven fabric sheet 2 including the fold (the part shown with the oblique lines in FIG. 3(b)) was cut off to form an ear part 3, a handle 4, and a seal fragment 5. Next, the nonwoven fabric sheet 2 was heat-sealed along the side which had used to be the long side of the rectangle (6 in FIG. 3(c) showing the part to be heat-sealed) to form a side 10 of the shopping bag 1 (see FIG. 3(c)). In order for the handle 4 to be made of double nonwoven fabric sheets 2, and to provide a gusset 9 to the completed nonwoven fabric 1, both sides of the heat-sealed nonwoven fabric sheet 2 were folded inward (e.g., following line X or X' of FIG. 3(c)), and the nonwoven fabric sheet 2 was heat-sealed along the line opposing the handle 4 and the seal fragment 5 (6 in FIG. 3(d) showing the part to be heat-sealed) to form the shopping bag 1. Subsequently, the shopping bag 1 was turned inside out, and a modified polyvinyl alcohol film 12 was placed over the surface of the nonwoven fabric sheet 2 which was to be the outer surface of the shopping bag 1; then the nonwoven fabric sheet 2 and the modified polyvinyl alcohol film 12 were bonded together through thermal adhesion. Printing on top of all that with serigraphy forms a print ink layer 13, thereby completing the manufacture of the shopping bag 1 of the present invention (see FIG. 2). Only about 2 g of the modified polyvinyl alcohol film 12 dissolves in 100-g water at 20 °C, but no less than 80 g is able to dissolve in warm water of 60 °C. The modified polyvinyl alcohol film 12 was prepared by adding 1.0 percent by mass of High Link DM (made by Clariant) as crosslinker to Gohsefimer Z-200 (made by Nippon Synthetic Chemical Industry Co., Ltd.), and was formed to be a 40 µm-thick film.

The thus-manufactured shopping bag 1 of the present invention has the upper edge of the ear part 3 shaped like a bent convex curve, and the part from the side edge of the ear part 3 to the upper edge of the side 10 of the bag is shaped like a bent concave curve. The shopping bag 1 also includes, as depicted in FIG. 1, a lower part 8 of the bag which has a bottom 7 that can close and stretch linearly, right and left sides 10 that can be folded inward with the gusset 9, and an upper part 11 of the bag forming a pair of the folded broad handles 4.
The shopping bag 1, therefore, is immune to splitting or tearing, and, compared with related-art shopping bags made of nonwoven fabric without any ear, has significantly increased load limits as well as permissible volume of contents stuffed inside. The shopping bag 1 of the present invention, hence, was usually able to be used more than 5 times repeatedly even when used repeatedly with heavy or bulky merchandise stuffed inside. Furthermore, the fact that the nonwoven fabric sheet 2 made from polyolefin is light and able to be folded compactly as well as unfolded to the original form with ease makes the shopping bag 1 of the present invention fairly suitable for being carried around.

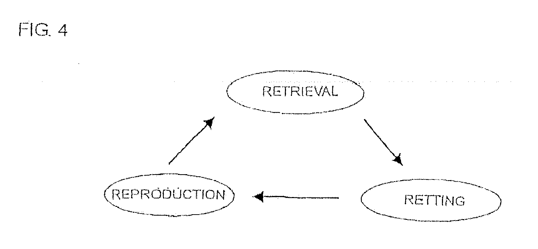

Retting the shopping bag 1 put in a warm water tank whose temperature was kept at 65 °C for approximately 3 minutes with ultrasonic vibration being applied made the print ink layer 13 separate from the surface of the shopping bag 1. After retrieving the shopping bag, which print ink layer 13 had been separated, from the warm water tank, the separated print ink sank to the bottom of the tank due to its greater relative density than water. The sunk print ink was then retrieved from the warm water tank.
As stated above, even if the surface of the polyolefin nonwoven fabric sheet 2 had a printed image thereon, by interposing the modified polyvinyl alcohol film 12 as a polymer region between the polyolefin nonwoven fabric sheet 2 and the print ink layer 13, separating the print ink layer 13 was easy.
Furthermore, remaking a bag after reproducing nonwoven fabric by using the shopping bag from which the print ink layer had been removed as raw material realized the reproduction of a new shopping bag.
The shopping bag 1, therefore, was able to be recycled through a recycling method such as the one shown in FIG. 4.

### Example 2

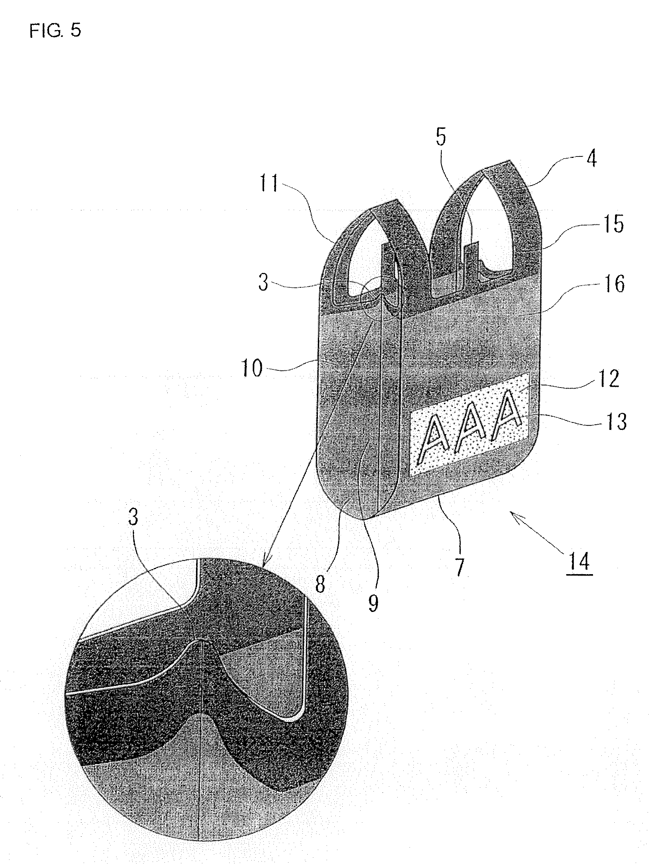

A shopping bag 14 according to Example 2 of the present invention is formed by a polypropylene nonwoven fabric sheet 16 whose center includes a thick part 15 compared with both sides, the sheet 16 heat-sealed to be shaped like a bag. The manufacture of the shopping bag 14 follows the same procedure as Example 1.
The shopping bag 14 of the present invention manufactured in this way has the upper edge of the ear part 3 shaped like a bent convex curve, and the part from the side edge of the ear part 3 to the upper edge of the side 10 of the bag is shaped like a bent concave curve. The shopping bag 14 also includes, as depicted in FIG. 5, the thick part 15 including the handle 4 of the upper part 11 of the bag is made of a single-layer thick nonwoven fabric with 2.0 times or more thickness compared with the other parts of the shopping bag 14. Besides, the length of the thick part 15 along the longitudinal direction of the shopping bag 14 is one-third of the whole length of the bag.
The shopping bag 14, therefore, is immune to splitting or tearing, and has significantly increased load limits as well as permissible volume of contents stuffed inside. The shopping bag 14 of the present invention, hence, can be used repeatedly even when used repeatedly with heavy or bulky merchandise stuffed inside. Furthermore, the fact that nonwoven fabric 16 made from polyolefin is light and able to be folded compactly as well as unfolded to the original form with ease makes the shopping bag 14 of the present invention fairly suitable for being carried around.

The print ink layer 13 was separated from the shopping bag 14 using the same method as in Example 1. This revealed that, similarly to the shopping bag 1 of Example 1, even if the surface of polyolefin nonwoven fabric 16 had a printed image thereon, by interposing the modified polyvinyl alcohol film 12 as a polymer region between polyolefin nonwoven fabric 16 and the print ink layer 13, separating the print ink layer 13 was easy.
Furthermore, remaking a bag after reproducing nonwoven fabric by using the shopping bag from which the print ink layer had been removed as raw material realized the reproduction of a new shopping bag.
The shopping bag 14, therefore, was able to be recycled through a recycling method such as the one shown in FIG. 4.

### Example 3

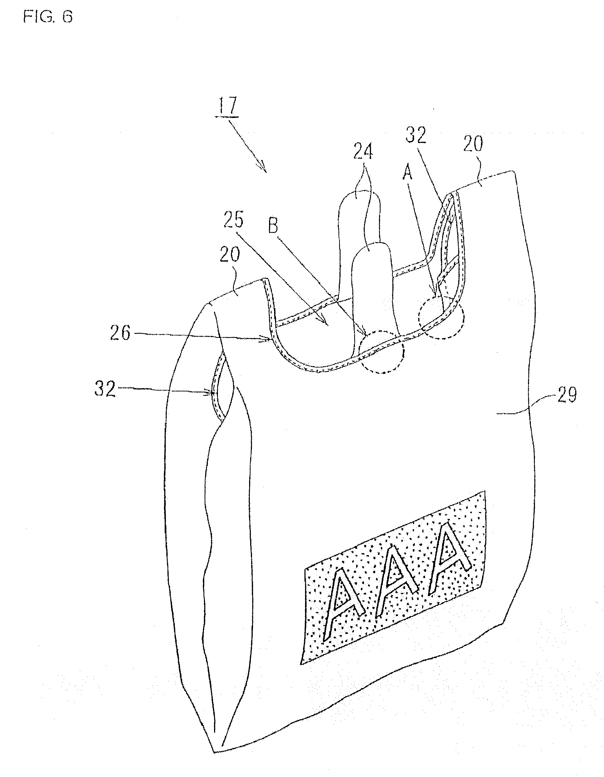

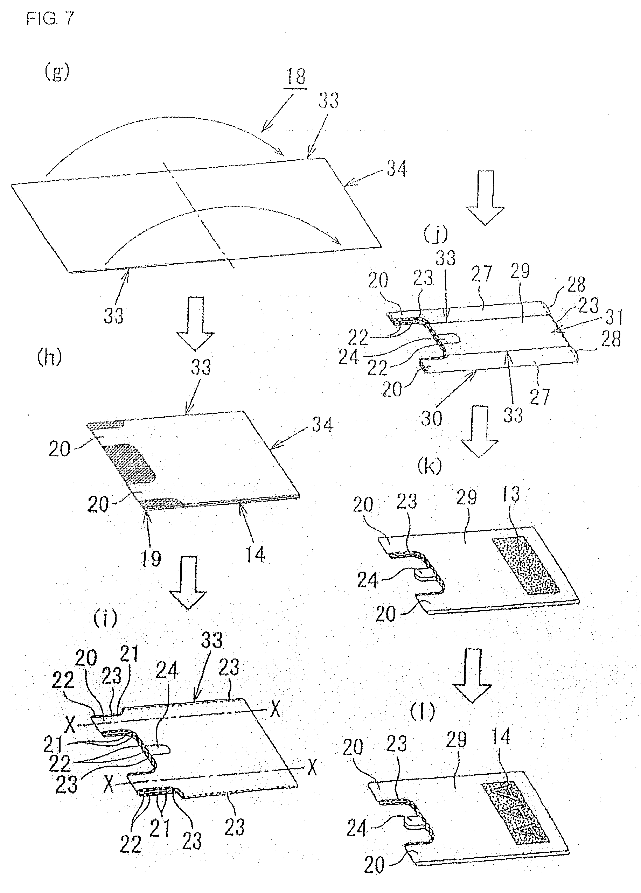

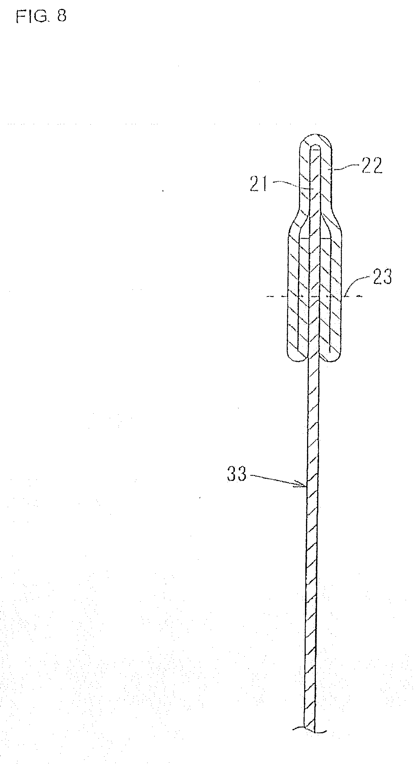

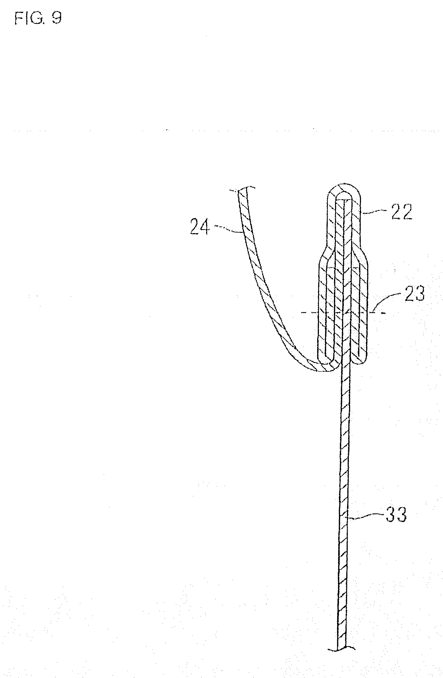

A shopping bag 17 according to Example 3 of the present invention depicted in FIGS. 6 to 9 is manufactured as described below.
A rectangular polypropylene nonwoven fabric sheet 18 whose long sides 33 measure approximately 100 cm and short sides 34 measure approximately 40 cm had been prepared. One short side 34 was folded to lap over the other short side 34 (see FIG. 7(g)), forming a fold 19 whose approximate center and its both ends were cut off to form a handle 20 (see FIG. 7(h)). Each end edge 21 of the cut-off center and both ends was entirely covered over with a polypropylene nonwoven fabric tape 22 that was about 1.5-cm wide; then it was attached by sewing with a polypropylene resin thread 23. In addition, each of the lapped-over right and left long sides 33 was stitched together with the polypropylene resin thread 23 (see FIG. 7(i)). Having the end edge 21, which is the fringe of the apertural area and the handle, covered over and stitched with the polypropylene nonwoven fabric tape 22 reinforces the bag by increasing the tensile strength. In the present example, the polypropylene nonwoven fabric tape 22 was stitched after folded inward once to lap over as depicted in FIG. 8, which is the cross-section diagram of part A of FIG. 6. This further increased the tensile strength compared with the case in which the polypropylene nonwoven fabric tape 22 was stitched without folding it inward to lap over. The polypropylene nonwoven fabric tape 22 was stitched along with a pair of 9-cm-long, 4-cm-wide slender polypropylene resin knot fragments 24 at a fringe 26 of an apertural area 25 (see FIG. 7(i)). Each of the knot fragment 24 was stitched along with the polypropylene nonwoven fabric tape 22 folded inward once to lap over as depicted in FIG. 7(j), which is the cross-section diagram of part B of FIG. 6. Then, the sewn right and left long sides 33 were folded about 8 cm inward along the X-X lines in FIG. 7(i) as axes so that a completed bag body 29 has gussets. A lower end 28 of this fold 27 and the lapped short side 34 were then sewn together with the polypropylene resin thread 23 to form a side 30 and a lower part 31 of the bag body 29 (see FIG 6(j)). Next, the shopping bag 17 was turned inside out, and the modified polyvinyl alcohol film 12 was bonded on the surface of the polypropylene nonwoven fabric sheet 18, which is the outer surface of the shopping bag 17, in the same way as in Example 1 to form the print ink layer 13. This reinforced the fringe 26 of the apertural area 25 and a fringe 32 of the handle 20 by sewing them along with the polypropylene nonwoven fabric tape 22. This completed shopping bag 17 of the present invention.
Besides, the print ink layer 13 was separated from the shopping bag 17 using the same method as in Example 1. This revealed that, similarly to the shopping bag 1 of Example 1, even if the surface of the polypropylene nonwoven fabric sheet 18 had a printed image thereon, by interposing the modified polyvinyl alcohol film 12 as a polymer region between the polypropylene nonwoven fabric sheet 18 and the print ink layer 13, separating the print ink layer 13 was easy.
Furthermore, remaking a bag after reproducing nonwoven fabric by using the shopping bag from which the print ink layer had been removed as raw material realized the reproduction of a new shopping bag.
The shopping bag 17, therefore, was able to be recycled through a recycling method such as the one shown in FIG. 4.

### Example 4

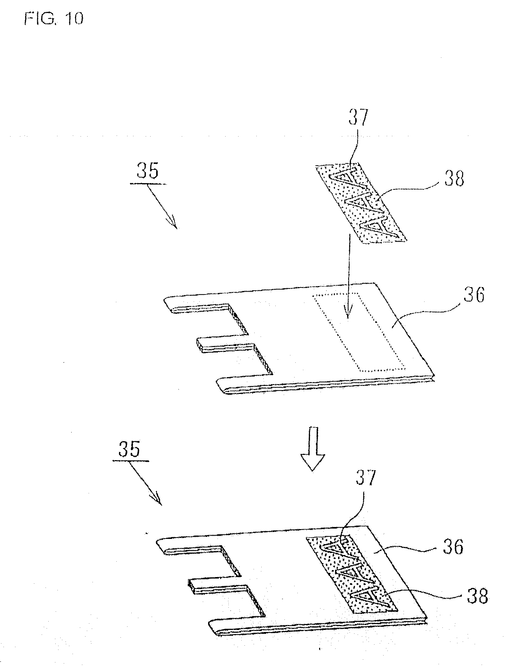

A shopping bag 35 according to Example 4 of the present invention formed by the same method as in Example 1 was turned inside out to make the surface of a nonwoven fabric sheet 36 come outside to be the outer surface of the shopping bag 35. Then, a modified polyvinyl alcohol film 38 whose surface possessed with a print ink layer 37 formed by serigraphy beforehand was lapped over, and the nonwoven fabric sheet 36 and the modified polyvinyl alcohol film 38 were bonded together with a smoothing iron by thermal adhesion to manufacture the shopping bag 35 of the present invention (see FIG. 10). The modified polyvinyl alcohol film was the same one used in Example 1.
Besides, the print ink layer 37 was separated from the shopping bag 35 using the same method as in Example 1. This revealed that, similarly to the shopping bag 1 of Example 1, even if the modified polyvinyl alcohol film with a preprinted surface had been used, by interposing modified polyvinyl alcohol as a polymer region between the nonwoven fabric sheet 36 and the print ink layer 37, separating the print ink layer 37 was easy.
Furthermore, remaking a bag after reproducing nonwoven fabric by using the shopping bag from which the print ink layer had been removed as raw material realized the recycling of a new shopping bag through a recycling method such as the one shown in FIG. 4.

### Example 5

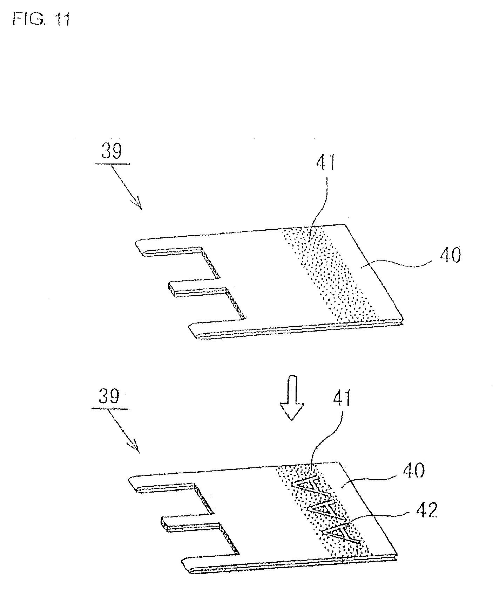

A shopping bag 39 according to Example 5 of the present invention formed by the same method as in Example 1 was turned inside out to make the surface of a nonwoven fabric sheet 40 come outside to be the outer surface of the shopping bag 39; then, a modified polyvinyl alcohol aqueous solution 41 was applied to the surface. After evaporating the moisture, a print ink layer 42 was formed on the surface by serigraphy to manufacture the shopping bag 39 of the present invention (see FIG. 11). The modified polyvinyl alcohol aqueous solution 41 was prepared by mixing 1.0 percent by mass of High Link DM (made by Clariant) as crosslinker with Gohsefimer Z-200 (made by Nippon Synthetic Chemical Industry Co., Ltd.).
Subsequently, the print ink layer 42 was separated from the shopping bag 39 using the same method as in Example 1. This revealed that, similarly to the shopping bag 1 of Example 1, separating the print ink layer 42 from the shopping bag 39 obtained in the aforementioned method was easy by interposing the modified polyvinyl alcohol aqueous solution 41 as a polymer region between the nonwoven fabric sheet 40 and the print ink layer 42.
Furthermore, remaking a bag after reproducing nonwoven fabric by using the shopping bag from which the print ink layer had been removed as raw material realized the recycling of a new shopping bag through a recycling method such as the one shown in FIG. 4.

## Claims

1. A shopping bag made of nonwoven fabric comprising:
a lower part which has a bottom that is capable of closing and stretching linearly;
right and left sides that are folded inward with a gusset; and
an upper part forming a pair of folded broad handles; wherein
at least a surface of the shopping bag is made of polyolefin nonwoven fabric, and
at each of the right and left sides of the bag, two corners are heat-sealed at a tie together point extending in a longitudinal direction, and at the top of the each heat-sealed part, an ear part extending upward from the upper edge of the sides of the bag is formed and the upper edge of the ear part is shaped like a bent convex curve, and a part from the side edge of the ear part to the upper edge of each side of the bag is shaped like a bent concave curve.
